# EUROPEAN PATENT APPLICATION

(11) **EP 2 840 392 A1**
(43) Date of publication of application: **25.02.2015**
(21) Application number: 14174927.5
(22) Date of filing: 30.06.2014
(51) Int. Cl.: G01N 30/60

(54) **Chromatography column**

(30) Priority: 07.08.2013 US 201313961189
(71) Applicant: Pall Corporation, Port Washington, NY 11050 (US)
(72) Inventor: Walker, Neil J., Waterlooville, Hampshire PO7 7SU (GB); Horton, David A., Waterlooville, Hampshire PO8 9WE (GB)
(74) Representative: Hoeger, Stellrecht & Partner Patentanwälte

(57) **Abstract**

Chromatography columns (100) having at least one end assembly (5,6) comprising a backing plate (520,620) adhesively bound to a flow distributor (500,600), and methods of making and using the columns are disclosed.

## Description

### BACKGROUND OF THE INVENTION

Chromatography columns are used in a variety of processes to purify liquids and/or separate substances from liquids. For example, chromatography columns can be used in industrial processes to purify process liquids and/or separate one or more substances of interest from process liquids. Typically applications include preparative purification of fine chemicals and/or pharmaceuticals.

However, there is a need for improved chromatography columns.

### BRIEF SUMMARY OF THE INVENTION

An embodiment of the invention provides a chromatography column comprising (a) a tube having a first end and a second end and a hollow interior; (b) a first end assembly and a second end assembly, each assembly being mountable at the respective end of the tube to close off the tube and define therein a space for a chromatography medium, wherein at least one assembly comprises a flow distributor and a backing plate; (i) the flow distributor comprising a first surface facing the interior of the tube, and a second surface facing away from the interior of the tube, a flow distributor through hole through the first and second surfaces of the flow distributor, and a plurality of fluid channels in fluid communication with the flow distributor through hole; (ii) the backing plate comprising a first surface and a second surface, the first surface of the backing plate facing the second surface of the flow distributor, and a backing plate through hole through the first and second surfaces of the backing plate, wherein the backing plate through hole is in fluid communication with the flow distributor through hole; wherein the backing plate is adhesively bound to the flow distributor.

### BRIEF DESCRIPTION OF THE SEVERAL VIEWS OF THE DRAWING(S)

Figure 1 shows a representative chromatography column comprising first and second end assemblies in accordance with an embodiment of the invention, on a stand, wherein the end assemblies each comprise a backing plate adhesively bound to a flow distributor.
Figure 2 shows top views and bottom views of backing plates used in the end assemblies in the column shown in Figure 1. In the illustrated embodiment, Fig. 2A' and 2B' is a fixed backing plate, and Fig. 2A'' and 2B'' is an adjustable backing plate.
Figure 3 shows top views and bottom views of flow distributors used in the end assemblies in the column shown in Figure 1. In the illustrated embodiment, Fig. 3A' and 3B' is a fixed flow distributor, and Fig. 3A'' and 3B'' is an adjustable flow distributor.

### DETAILED DESCRIPTION OF THE INVENTION

Advantageously, and in contrast with some conventional chromatography columns wherein the flow distributor is bolted to the backing plate with numerous bolts, which can allow contaminant fluids to enter the column via the gaps around the screw openings, threads, and/or between the flow distributor and backing plate, in accordance with the invention, wherein the flow distributor is adhesively bound to the backing plate without bolts or with a reduced number of bolts, the entrance of contaminant fluids into the columns can be reduced or eliminated. This advantage is especially desirable, as the operator of a conventional column may be unable to determine whether contamination is present.

In another advantage, while the invention can be used with, for example, a steel backing plate, non-metal materials (e.g., plastic materials as discussed in more detail below) can also be used, which can greatly reduce the weight of the end assembly or assemblies.

Embodiments of the invention are suitable for use with a wide variety of chromatography columns, e.g., adjustable or fixed bed height columns, that include at least one end assembly comprising a backing plate and a flow distributor.

A variety of materials providing adhesive bonds, including commercially available products providing adhesive bonds, are suitable for use in the invention. Adhesives such as acrylics (e.g., 2 part acrylics), cyanoacrylates, and bonding films/epoxy adhesives are especially suitable. Suitable commercially available products include, but are not limited to, DP-8005 (3M Scotch Weld), LOCTITE 406 and LOCTITE 3038 (Henkel Corporation); 2050 (Permabond) and adhesive film (Collano Adhesives).

The flow distributor and the backing plate can be made from the same, or different materials. For example, one can be made from metal (e.g., steel) and the other can be made from plastic (including composite plastic and/or reinforced plastic). Alternatively, both the flow distributor and the backing plate can be made from metal (e.g., both made from the same metal, or different metals), or from plastic (e.g., both made from the same plastic, or different plastics, or one can be made from reinforced plastic and the other made from a different category of plastic). Suitable flow distributors and backing plates can be prepared as is known in the art.

An embodiment of the invention provides a chromatography column comprising (a) a tube having a first end and a second end and a hollow interior; (b) a first end assembly and a second end assembly, each assembly being mountable at the respective end of the tube to close off the tube and define therein a space for a chromatography medium, wherein at least one assembly comprises a flow distributor and a backing plate; (i) the flow distributor comprising a first surface facing the interior of the tube, and a second surface facing away from the interior of the tube, a flow distributor through hole through the first and second surfaces of the flow distributor, and a plurality of fluid channels in fluid communication with the flow distributor through hole; (ii) the backing plate comprising a first surface and a second surface, the first surface of the backing plate facing the second surface of the flow distributor, and a backing plate through hole through the first and second surfaces of the backing plate, wherein the backing plate through hole is in fluid communication with the flow distributor through hole; wherein the backing plate is adhesively bound to the flow distributor.

In a typical embodiment of the chromatography column, each end assembly further comprises a bed support attached to the first surface of the flow distributor, wherein the bed support includes fluid flow openings, and the plurality of fluid channels of the flow distributor are in fluid communication with the flow distributor through hole and the fluid flow openings of the bed support.

Each of the components of the invention will now be described in more detail below, wherein like components have like reference numbers.

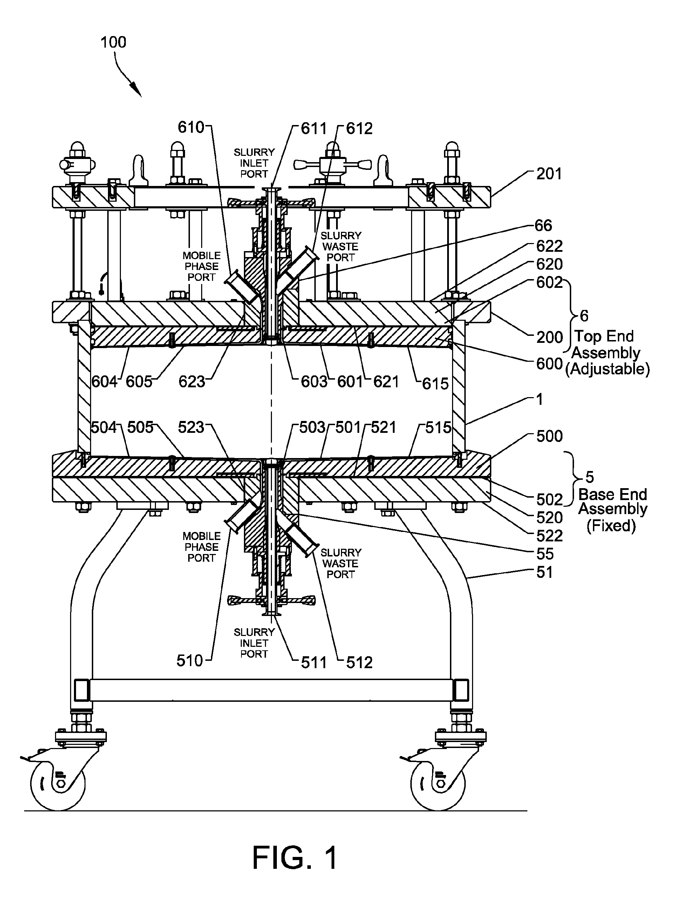

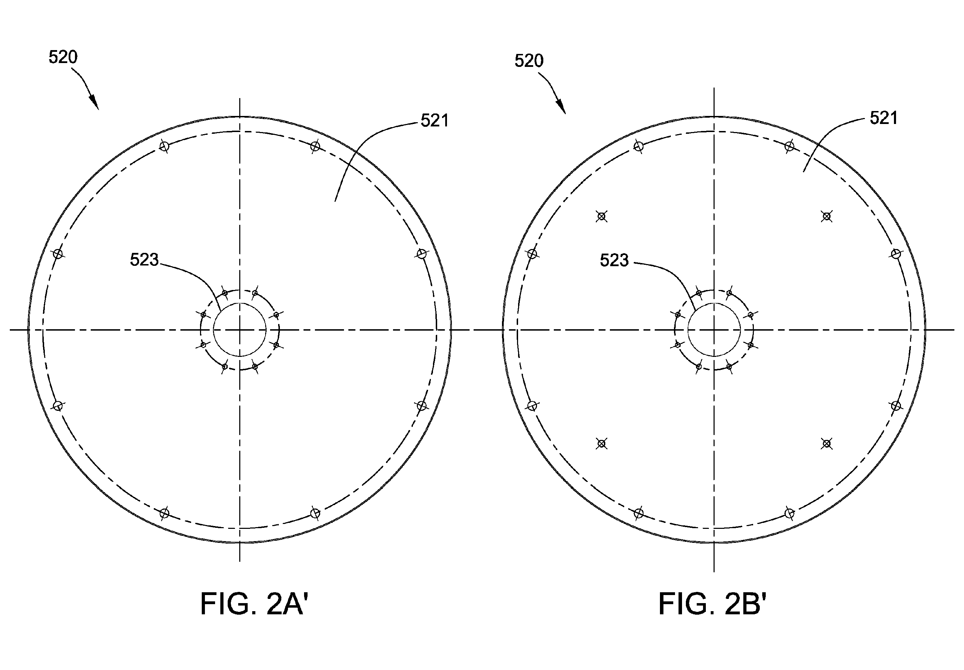

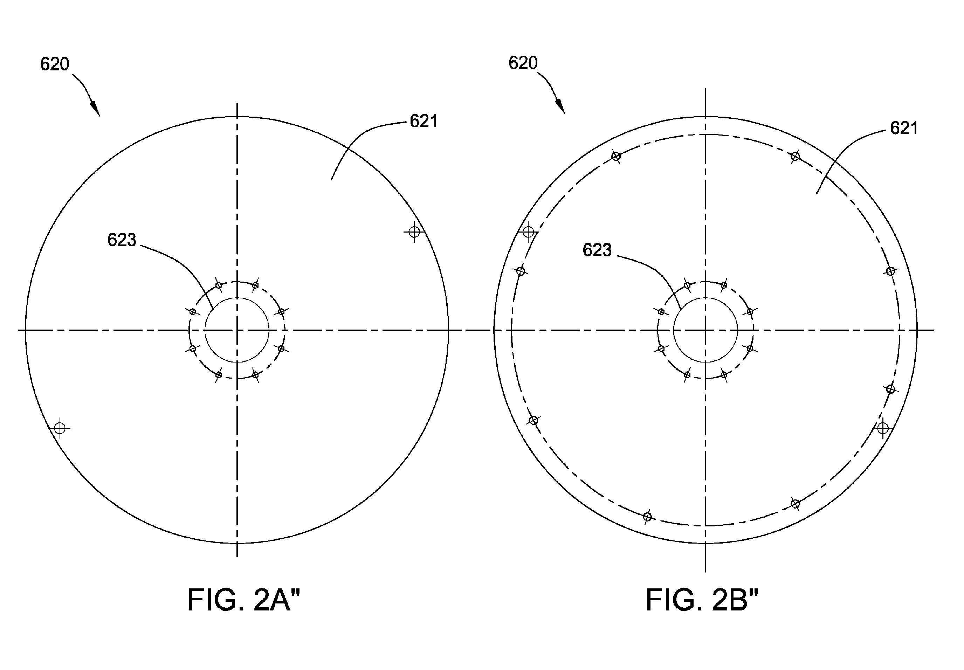

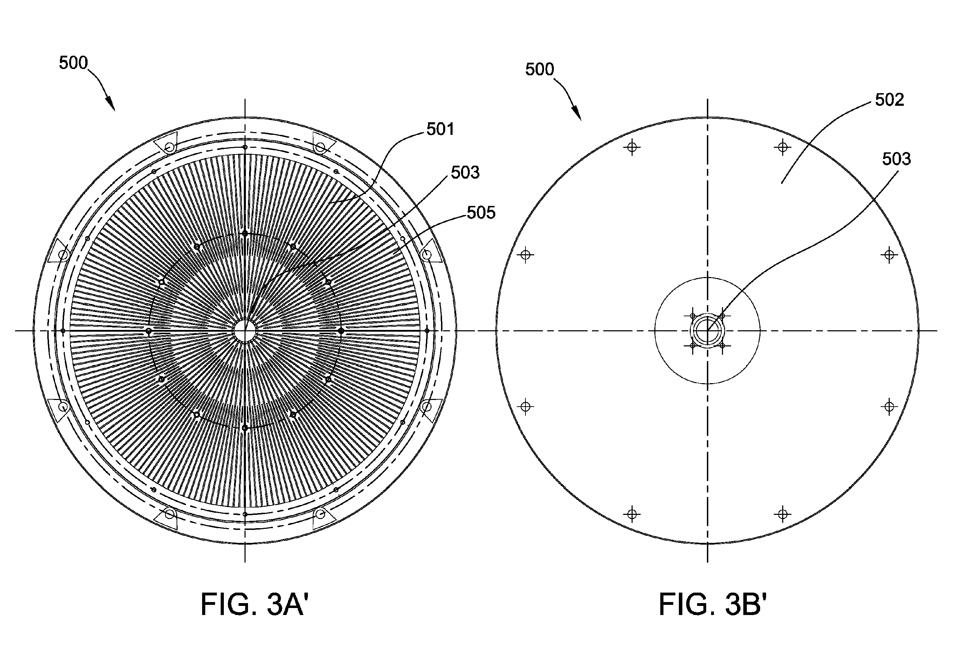

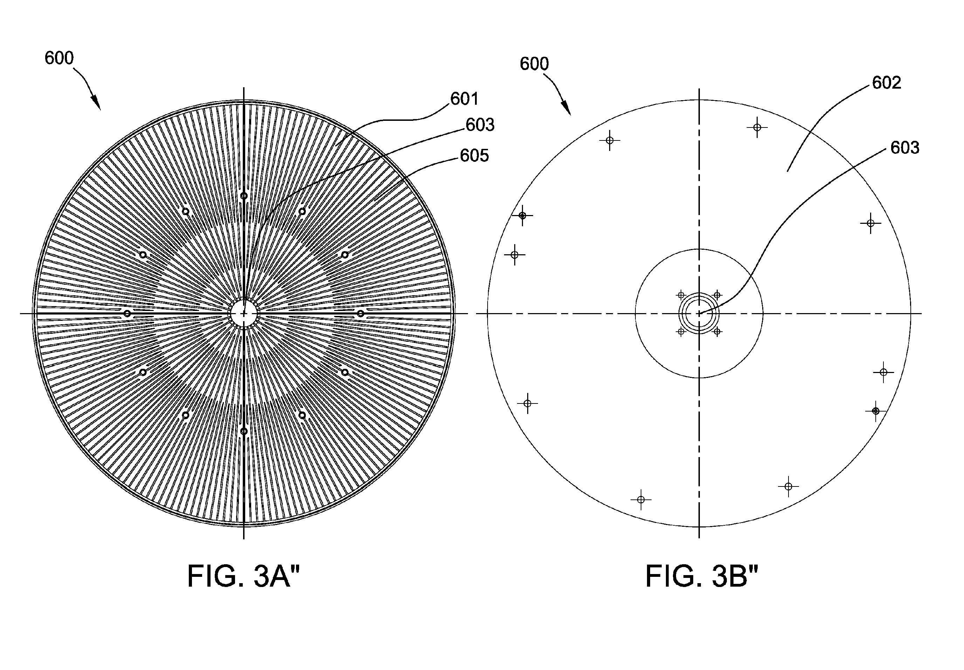

Figure 1 shows an illustrative chromatography column in accordance with an embodiment of the invention, and Figures 2 and 3 show illustrative backing plates and illustrative flow distributors.

In Figure 1, the illustrated chromatography column 100 comprises a cylindrical column tube 1 (typically made of a strong inert material such as stainless steel or an acrylic) defining a cavity for receipt of chromatographic media, separating a base end assembly (or first assembly) 5 at one end, from a top end assembly (or second assembly) 6 at the other end. The illustrated column also has flanges 200 and 201, and is supported on the ground through a set of legs 51. If desired, the legs can further include wheels and/or the legs can provide for adjustable height and/or level of the column. In the illustrated embodiment, the top end assembly is adjustable and the base end is fixed, but the invention is not so limited. Alternatively, or additionally, the column tube can be movable with respect to either or both end assemblies, e.g., as disclosed in U.S. Patent 7,604,747.

The illustrated base end assembly 5 comprises a flow distributor 500 (shown in more detail in Fig. 3A' and 3B'), a bed support 515 (on the first surface of the flow distributor as discussed below, and shown in Figure 1), and a backing plate 520 (shown in more detail in Fig. 2A' and 2B'); the flow distributor 500 comprising a first surface 501 facing the interior of the tube, the first surface also comprising a plurality of fluid channels 505; and a second surface 502 facing away from the interior of the tube, a flow distributor through hole 503 through the first and second surfaces of the flow distributor (typically, the through hole is arranged centrally). The bed support 515, which is attached to the first surface 501 of the flow distributor (suitable supports are commercially available and are known in the art), includes a plurality of fluid flow openings, and the plurality of fluid channels 505 of the flow distributor are in fluid communication with the flow distributor through hole 503 and the fluid flow openings in the bed support 515. The illustrated backing plate 520 comprises a first surface 521 and a second surface 522, the first surface of the backing plate facing the second surface of the flow distributor, and a backing plate through hole 523 through the first and second surfaces of the backing plate (typically, the through hole is arranged centrally), wherein the backing plate through hole 523 is in fluid communication with the flow distributor through hole 503; wherein the backing plate is adhesively bound to the flow distributor.

A multiport access valve 55 communicates with the interior of the tube through the through holes 503 and 523 in the bottom assembly 5 to enable packing or unpacking of chromatography medium and removal or collection of eluent in processing. In the illustrated embodiment, the access valve 55 comprises a mobile phase port 510, a slurry inlet port 511, and a slurry waste port 512.

Similarly, the illustrated top end assembly 6 comprises a flow distributor 600 (shown in more detail in Fig. 3A'' and 3B''), a bed support 615 (on the first surface of the flow distributor as discussed below, and shown in Figure 1), and a backing plate 620 (shown in more detail in Fig. 2A'' and 2B''); the flow distributor 600 comprising a first surface 601 facing the interior of the tube, the first surface also comprising a plurality of fluid channels 605; and a second surface 602 facing away from the interior of the tube, a flow distributor through hole 603 through the first and second surfaces of the flow distributor (typically, the through hole is arranged centrally). The bed support 615, which is attached to the first surface 601 of the flow distributor (suitable supports are commercially available and are known in the art), includes a plurality of fluid flow openings, and the plurality of fluid channels 605 of the flow distributor are in fluid communication with the flow distributor through hole 603 and the fluid flow openings in the bed support 615. The illustrated backing plate 620 comprises a first surface 621 and a second surface 622, the first surface of the backing plate facing the second surface of the flow distributor, and a backing plate through hole 623 through the first and second surfaces of the backing plate (typically, the through hole is arranged centrally), wherein the backing plate through hole 623 is in fluid communication with the flow distributor through hole 603; wherein the backing plate is adhesively bound to the flow distributor.

A multiport access valve 66 communicates with the interior of the tube through the through holes 603 and 623 in the top assembly 6 to enable packing or unpacking of chromatography medium and removal or collection of eluent in processing. In the illustrated embodiment, the access valve 66 comprises a mobile phase port 610, a slurry inlet port 611, and a slurry waste port 612.

In accordance with the illustrated embodiment, the top end assembly 6 is movable within the cavity of the tube in an operational mode, for example, to pack or compress a bed of chromatographic media (not shown) which is used to effect chromatographic separation of materials of interest within the column.

In accordance with the invention, chromatographic separation can be carried out using downward or upward flow. For example, in upward flow, liquid containing materials to be separated can be introduced through access valve 55, and flows upward through the media bed to be collected at the top of the column via access valve 66. In downward flow, liquid containing materials to be separated can be introduced through access valve 66, and flows downward through the media bed to be collected at the bottom of the column via access valve 55.

In the illustrated embodiment, one end assembly shows the flow distributor is adhesively bound to the backing plate without separate fasteners, and the other end assembly shows the flow distributor is adhesively bound to the backing plate and a few fasteners are present, and thus, there are no or a reduced number of fasteners passing through openings in the flow distributor and/or backing plates to bind the flow distributor and backing plate together. Thus, in contrast with the commercially available columns, there is less opportunity for contaminant fluids to enter the column via the gaps around the screw openings, threads, and/or between the flow distributor and backing plate.

The following examples further illustrate the invention but, of course, should not be construed as in any way limiting its scope.

### EXAMPLE 1

This example demonstrates adhesively binding a backing plate to a flow distributor in accordance with an embodiment of the invention. The example additionally shows a column can be prepared using a composite reinforced plastic backing plate instead of a stainless steel backing plate, resulting in a column that can be prepared with reduced weight.

A commercially available chromatograph column under the trademark RESOLUTE (Pall Corporation, Port Washington, NY) is obtained, and the stainless steel flanges and backing plates are replaced with fiber reinforced plastic component materials (using Figure 1 for reference, the fiber reinforced components correspond to 200 and 201 (flanges), and 520 and 620 (backing plates). The bed supports are commercially available POREMET steel plate style meshes (G. BOPP, and Co., AG, Zurich, Switzerland).

Two polypropylene flow distributor plates (500 and 600) and two fiber reinforced plastic (also known as glass reinforced plastic) backing plates are obtained.

An adhesive film is obtained (Collano Adhesives AG, Switzerland). The film is placed on the second surfaces (502, 602) of the polypropylene distributor plates, the film is heated and pressure is applied to the heated film.

Epoxy resin mixed with hardener is applied to the free surface of the film (the surface of the film that is not bound to the distributor plate). The fiber reinforced plastic backing plate is placed on the resin and the resin is allowed to cure.

Having bonded the flow distributor plates to the respective backing plates, the chromatography column is re-assembled and connected to a pressure test rig. It is subjected to a hydrostatic pressure test using water. Internal column pressure is raised steadily up to the maximum allowable pressure (MAP) of 4.2 bar. Internal pressure is raised again until it reaches the column test pressure of 6.0 bar. The pressure is locked off in the vessel and monitored for a period of 60 minutes. The internal pressure is recorded on a pressure transducer and the trace printed and attached to test report and signed. The test is witnessed by a Notified Body under the European Pressure Equipment Directive (PED 97/23/EC).

### EXAMPLE 2

This example demonstrates the results of adhesively binding two polypropylene substrate materials (representing a distributor plate and a flow distributor) using a variety of adhesives. For each adhesive, 10 samples are tested, to determine the tensile test strength. The adhesives are applied and cured in accordance with the manufacturer's guidelines for each adhesive. Testing is carried out in accordance with BS EN 2243-1, using calibrated test equipment (a Lloyds EX 50K, load cell 50 KN, and a digital vernier) at ambient room temperature and general atmospheric humidity. Shear strength is measured in MPa, maximum load is measured in kN, and the mode of failure (shear (separation of bond) or adherend tensile failure (bond strength greater than the materials)) is recorded. The test speed is 10 mm/min.

The following adhesives are used: DP-8005 (3M Scotch Weld; 2 parts), LOCTITE 3038, and LOCTITE 406 (with LOCTITE 770 primer) (Henkel Corporation; 3038=2 parts; 406=1 part plus primer); 2050 (Permabond; 1 part plus POP primer) and PP/PPA film (Collano Adhesives; film plus 2 part epoxy adhesive).

The results are as follows:

| Adhesive | Average Breaking Force (kN) | Result |
|---|---|---|
| DP-8005 | 3.7 | Bond strength greater than the bond materials |
| LOCTITE 3038 | 2.8 | Bond strength greater than the bond materials |
| LOCTITE 406 + 770 | 2.2 | Separation of bond |
| 2050 + POP | 1.4 | Separation of bond |
| PP/PA + epoxy | 2.1 | Bond strength greater than the bond materials |

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A chromatography column comprising
(a) a tube having a first end and a second end and a hollow interior;
(b) a first end assembly and a second end assembly, each assembly being mountable at the respective end of the tube to close off the tube and define therein a space for a chromatography medium, wherein at least one assembly comprises a flow distributor and a backing plate;
(i) the flow distributor comprising a first surface facing the interior of the tube, and a second surface facing away from the interior of the tube, a flow distributor through hole through the first and second surfaces of the flow distributor, and a plurality of fluid channels in fluid communication with the flow distributor through hole;
(ii) the backing plate comprising a first surface and a second surface, the first surface of the backing plate facing the second surface of the flow distributor, and a backing plate through hole through the first and second surfaces of the backing plate, wherein the backing plate through hole is in fluid communication with the flow distributor through hole;
wherein the backing plate is adhesively bound to the flow distributor.

2. The chromatography column of claim 1, comprising an acrylic, cyanoacrylate, or a bonding film/epoxy adhesive providing an adhesive bond between the first surface of the backing plate and the second surface of the distributor.

3. The chromatography column of claim 1 or 2, comprising a film adhesively bound between the first surface of the backing plate and the second surface of the flow distributor.

4. The chromatography column of any one of claims 1-3, comprising a plastic flow distributor and/or a plastic backing plate.

5. The chromatography column of any one of claims 1-4, comprising a plastic composite flow distributor and/or a plastic composite backing plate.

6. The chromatography column of any one of claims 1-5, comprising a metal flow distributor and/or a metal backing plate.
